# EUROPEAN PATENT APPLICATION

(11) **EP 4 794 225 A1**
(43) Date of publication of application: **19.08.2026**
(21) Application number: 25158390.2
(22) Date of filing: 17.02.2025
(51) Int. Cl.: H04B 17/10

(54) **METHOD FOR MONITORING A TRANSMISSION POWER PARAMETER OF A DEVICE COMPRISING AN ANTENNA CONFIGURED FOR WIRELESS COMMUNICATION WITH A NETWORK, COMPUTER PROGRAM AND COMPUTER-READABLE MEDIUM**

(71) Applicant: Vodafone Group Services Limited, Newbury RG14 2FN (GB)
(72) Inventor: BOUKLEY HASAN, Wael, London, W2 6BY (GB)
(74) Representative: Boult Wade Tennant LLP

(57) **Abstract**

A method for monitoring a transmission power parameter of a device comprising an antenna configured for wireless communication with a network. The method comprises a step of identifying an output transmission power parameter of the antenna. Additionally, the method comprises a step of sending a communication indicating the output transmission power parameter and/or indicating a power parameter determined based on the output transmission power parameter to the network.

## Description

### FIELD

The disclosure relates generally to wireless communications in a network and more specifically, methods for monitoring a transmission power parameter of a device comprising an antenna configured for wireless communication with a network.

### BACKGROUND

In wireless communication networks in which devices with antennas communicate with a network via the antenna (for example, 3GPP cellular networks), efficient communications and overall network performance can depend on power monitoring and power control within the network. For example, the transmission power of the device antenna may directly impact uplink (end device to network) coverage, interference management, as well as the implementation of power control methods by the network or device.

For user equipment, UEs, in a cellular network, which may operate within strict power constraints, 3GPP standards (for example, LTE, 5G NR, and so on) may define mechanisms to regulate UE transmission power dynamically. This may allow signals to remain sufficiently strong for reliable connectivity, whilst also minimising excessive power that could cause interference.

Effective uplink power control may be important for maintaining a stable network connection, particularly in cell-edge scenarios in cellular networks, where signal attenuation may be higher. One example of power control that may be used is open-loop power control (OLPC), which can help set an initial transmission power based on path loss estimates. Another example of power control is closed-loop power control (CLPC), which continuously adjusts power levels based on feedback from the network.

Power regulation can enable UEs or other devices to transmit with just enough power to maintain link quality, which can optimise both battery life and spectral efficiency. Furthermore, precise device power management can help mitigate uplink interference, preventing high-power devices from degrading the signal quality of other users or, in cellular networks, neighbouring cells. As cellular networks evolve towards massive multi-input multi-output (MIMO) and millimetre-wave (mmWave) technologies, accurate power control may become even more critical to ensuring efficient spectrum utilization and enhanced uplink reliability.

Thus, it is desirable to provide methods capable of accurately monitoring transmission power.

### SUMMARY

A device comprising an antenna is able to communicate wirelessly with a network via the antenna. The device may be a UE or another cellular network device. The cellular network may be a 3G, 4G, 5G, 6G network, and so on. Other network devices and other types of network may be used.

Power is input to the antenna to allow the device to send signals to the network using the antenna. However, the power output by the antenna to send the signal may differ from the power input to the antenna, due to various factors including, for example, antenna losses, combiner losses, RF component variations and so on.

The output power of the antenna is ascertained (for example, determined, measured, calculated, estimated or identified in another manner). The output power need not be ascertained at a point of transmission by the device. For example, the same type of antenna may be tested under real-life conditions beforehand (and optionally, under various conditions, including for example, transmission at different frequencies, in different locations, with different input power values, and so on). In some cases, the result of these tests may be stored by the device, which the device can then use to ascertain the output power of the antenna (optionally prior to an attempt to transmit a signal). For instance, a difference between an input and output power for the antenna may be stored by the device, from which the device can determine the output power based on a known input power.

Once the output power has been identified, a communication indicating the output power is sent to the network. The indication need not be the output power itself but may be a difference between an input and output power of the antenna. In other examples, the communication may also or instead indicate a power parameter identified (for example, determined, measured, calculated, estimated or identified in another manner) based on the output power. For example, the communication may indicate an amount of power above the output power that the device is still capable of providing (for example, based on the limitations of the device and/or network regulations to limit transmission power).

In this way, the power reported to the network can accurately reflect how the antenna is being used. This can allow the network to more effectively implement power control mechanisms and other mechanisms for improving network performance (for instance, interference detection and management). Thus, by reporting an output power of an antenna to the network, network power management and performance can be improved in a straightforward manner.

In accordance with a first aspect, there is provided a method for monitoring a transmission power parameter of a device comprising an antenna configured for wireless communication with a network, the method comprising steps of:
identifying an output transmission power parameter of the antenna; and
sending a communication indicating the output transmission power parameter and/or indicating a power parameter determined based on the output transmission power parameter to the network.

Thus, the network can be informed of the output transmission power parameter of the antenna, or another power parameter related to the output transmission power parameter, in a straightforward manner. This can improve network performance by allowing the network to implement more effective control and management mechanisms, through providing more accurate antenna performance information.

The identifying may be performed by the device. This may comprise obtaining a transmission power parameter from storage of the device. The stored transmission power parameter may be the output transmission power parameter itself or another parameter that allows the device to determine, estimate or calculate the output transmission power parameter.

In some implementations, identifying the output transmission power parameter may comprise determining the output transmission power parameter based on a measurement. The measurement may be a measurement previously performed (for example, by an external device or software) and stored by the device. Determining the output transmission power parameter based on a measurement may provide a more accurate determination of the output transmission power parameter.

In some implementations, identifying the output transmission power parameter may also or instead comprise estimating the output transmission power parameter. The estimation may also be performed based on a measurement. Again, the measurement may be a measurement previously performed and stored by the device.

In some implementations, identifying the output transmission power parameter may also or instead comprise calculating the output transmission power parameter. The calculation may also be performed based on a measurement. Again, the measurement may be a measurement previously performed and stored by the device.

Optionally, the measurement may be performed by the device. In other words, the method may further comprise a step of performing, by the device, a measurement. The measurement may be a measurement of the output transmission power parameter, or may be another measurement indicative of the output transmission power parameter (for example, a standing wave ratio). In other implementations, the measurement may be performed by an external device. The external device may be a device of the same type, or a device having the same type of antenna. The measurement may be stored by the external device or the device.

In some implementations, the method may further comprise identifying a further output transmission power parameter and sending a further communication indicating the further output transmission power parameter (and/or a further power parameter determined based on the further output transmission power parameter) to the network. Antenna performance may degrade over time, or changing conditions may impact the antenna performance. Identifying the further output transmission power (that is, after the first step of identifying) may allow such degradation or other changes to be identified, and the network can continue to be informed of a more accurate transmission power parameter.

In some examples, the identifying the further output transmission power parameter may comprise performing a (further) measurement. Again, the measurement may be performed by the device and may be a measurement of the output transmission power parameter or another measurement indicative of the output transmission power parameter.

Optionally, the method may further comprise identifying (determining, estimating or calculating, and so on) a surplus or excess transmission power parameter for the antenna based on the output transmission power parameter. The surplus transmission power parameter may be an available surplus transmission power parameter. For example, the device or antenna may be capable of transmitting with a greater output transmission power parameter, if authorised. Accordingly, sending the communication indicating the power parameter determined based on the output transmission power parameter may comprise sending a communication indicating the available surplus transmission power parameter for the antenna. The available surplus transmission power parameter may be identified as a power headroom, for instance.

It will be appreciated that, where the device or antenna is transmitting or expected to transmit more than an allowed or possible power, the excess transmission power parameter may be an amount of power greater than the amount that the device is authorised or capable of transmitting.

Optionally, identifying the output transmission power parameter may comprise identifying the output transmission parameter based on one or more of: a type of antenna, a type of device, a type of radio frequency, RF, component comprised within the device, an expected radio frequency, RF, path of transmissions between the device and the network, an RF transmission frequency, and a conducted power parameter. Such factors may impact the output transmission power parameter and may allow an accurate output transmission power parameter to be identified, particularly if the output transmission power parameter is identified based on more than one of these factors.

In preferred examples, the sending of the communication is performed by the device. This may provide the network with greater assurance that the provided output transmission parameter is accurate. The sending of the communication may form part of the typical attach procedure of the device or may be sent following attachment to the network.

The method may further comprise receiving, from the network and at the device, an indication of a power parameter received at the network from the device. The device may thus be able to identify any inaccuracies in the identified output transmission power parameter - for example, if the received indication shows a lower power parameter than expected, based on the identified output transmission power parameter.

The method may further comprise, in response to determining that the indication differs from a power transmitted by the device by more than a threshold amount, adjusting the identified output transmission power parameter. The adjusting may, for example, be increasing the identified output transmission power parameter when the returned indication of the power parameter from the network is greater than expected. This may increase the accuracy of the identified output transmission power parameter, and thus can improve the network performance. The adjusted output transmission power parameter may then be sent to the network again. This may involve sending the adjusted output transmission power parameter to the same part or node of the network as before (for example, the same base station), or another part or node of the network (for example, a different base station, if the device has moved cells).

In some examples, the indication may comprise a plurality of indications of a power parameter received at the network from the device over a period of time. This this case, adjusting the identified output transmission power parameter may be performed in response to determining that the plurality of indications differ from a power transmitted by the device by more than a threshold amount. In other words, the method may involve determining whether a consistent gap between the identified output transmission power parameter and the indication exists, and adjust the identified output transmission power parameter only if so. This may reduce the risk of an anomalous result causing the identified output transmission power parameter to be adjusted unnecessarily. In other words, adjusting the identified output transmission power parameter based on the plurality of indications may allow more accurate refinements of the identified output transmission power parameter to be implemented.

Preferably, the device is a user equipment, UE. Other devices including antennas may be used, including but not limited to a satellite navigation system, a WiFi router, a machine-to-machine device, and so on.

In some examples, the network may be a telecommunications network. A telecommunications network may be particularly impacted by inaccurate power parameter reporting. This may be due to the number of devices in the telecommunications network and/or the need for interference management in such networks.

In some examples, the telecommunications network may be a cellular network. Cellular networks may be particularly impacted by inaccurate power parameter reporting.

Preferably, the network is a cellular network and the output transmission power parameter is reported to a base station of the cellular network. The base station may be any type of base station, including but not limited to, a NodeB, gNodeB, eNodeB and so on. The base station may comprise a MIMO antenna, which may specifically be a massive MIMO antenna. Massive MIMO antennas have a plurality of antenna elements or arrays and adjust their radiation patterns over time to direct signals to specific users. In some examples, this may be achieved by sending the signal over multiple paths that combine constructively at the user device.

In some implementations, the method may further comprise, adjusting or applying, at the device, an input transmission power parameter based on the output transmission power parameter. For example, after identifying the output transmission power parameter, the device may determine that the input transmission power parameter can be increased or decreased. The input transmission power parameter may be increased to allow or ensure that communications from the device reach the network, for example. The input transmission power parameter may be decreased to reduce interference, for instance.

Optionally, the output transmission power parameter may comprise a total radiated power. A total radiated power is a measure or indication of radiation of an antenna in a live system. As a result, it is not merely a function of the antenna, but also the transmitter and the connection between the antenna and the transmitter.

The methods described above may be implemented as a computer program comprising instructions to operate a computer or computer system. The computer program may be stored on a computer-readable medium, which may be non-transitory.

The computer system may include a processor, such as a central processing unit (CPU). The processor may execute logic in the form of a software program. The computer system may include a memory including volatile and non-volatile storage medium. The different parts of the system may be connected using a network (e.g. wireless networks and wired networks). The computer system may include one or more interfaces. The computer system may contain a suitable operating system such as UNIX (RTM) (including Linux (RTM)), Windows (RTM), for example.

It should be noted that any feature described herein may be used with any particular aspect or embodiment of the invention. Moreover, the combination of any specific apparatus, structural or method features is also provided, even if that combination is not explicitly disclosed.

The invention will now be described with reference to the attached drawings depicting different embodiments thereof, the drawings being provided purely by way of example and not limitation.

### BRIEF DESCRIPTION OF DRAWINGS

The invention may be put into practice in a number of ways, and preferred embodiments will now be described by way of example only and with reference to the accompanying drawings, in which:
Figure 1 shows a schematic message flow for monitoring a transmission power parameter according to an embodiment of the disclosure; and
Figure 2 illustrates a flow chart of a method for monitoring a transmission power parameter according to an embodiment of the disclosure.

It should be noted that the Figures are illustrated in schematic form for simplicity and are not necessarily drawn to scale. Like features are provided with the same (or similar) reference numerals.

### DESCRIPTION OF PREFERRED EMBODIMENTS

Conducted power is an RF power that is supplied to an antenna, as measured at an RF connector. The conducted power value may be reported by a device including an antenna configured to communicate wirelessly with a network to the network. For example, in 3GPP cellular networks, a UE can report the conducted power as an uplink power level to a base station. This can allow the network to make decisions or otherwise make changes based on the conducted power value. For example, as discussed above, power control and interference management may play an important role in providing efficient communication between devices with antennas and a network.

The present disclosure is based on the realisation that the conducted power does not fully reflect the actual over-the-air (OTA) transmission power of the device and/or antenna. In particular, the reported uplink power is typically measured before degradations due to, for example, antenna losses, combiner losses and RF component variations, occur, meaning that the actual transmitted power at the antenna port can be several decibels lower than the power reported by the device.

Historically, this impact of this difference may have been negligible. For example, in 3G networks, the difference between a conducted power and an output transmission power was minimal and so did not greatly impact actions taken by the network. However, it has been recognised that as networks continue to grow and new implementations are introduced, the impact of this difference will increase. In particular, with each new generation, the gap between the conducted (input) power and the output power is increasing. This is at least in part because a greater range of frequencies are being covered by the same antenna, which requires a greater number of RF combiners.

Furthermore, the discrepancy can vary across device vendors and device models. This can lead to inconsistent power transmission across the network, but also can make it more difficult to implement a manner of taking the discrepancy into account, since it can depend on various factors. As such, as discussed above, the network and/or base station may misinterpret uplink power measurements, which can impact several implementations at the network and/or base station, such as power control mechanisms, interference detection and MIMO and/or massive MIMO performance, for example.

The issue therefore is how the network can find out an actual OTA uplink power level to be able to improve network efficiency, interference management and uplink reliability.

The present disclosure relates to reporting an output transmission power parameter of an antenna to a network - that is, a parameter that takes into account the actual implementation of the antenna. Implementation factors that may impact an output transmission power parameter of an antenna may include antenna losses, combiner losses, and RF component variations, among other factors. Reporting a conducted power means that such real-world factors are not taken into account. In other words, using a conducted power results in considering transmission power in networks only considered in ideal and/or non-realistic scenarios. This can impact the implementation of various power-related monitoring and managing methods and systems, including power control or interference detection techniques.

For example, in OLPC, the network estimates a required transmission power based on path loss measurements and predefined parameters. However, if the actual transmitted power over the air is lower than expected due to implementation losses, the device may not generate sufficient uplink signal strength. This can lead to coverage issues, excessive retransmissions, and increased call drops, especially at the cell edge. Similarly, in CLPC, where a base station (or another network node) continuously adjusts the transmission power of a device (for example, a UE) using Transmit Power Control (TPC) commands, inaccurate uplink power readings may cause suboptimal adjustments. This may lead to oscillations in power levels and degraded uplink throughput.

Furthermore, in interference detection, a base station or other network node may wrongly attribute high interference levels to a device that is actually transmitting at a lower power due to hardware losses. This may lead to inefficient interference mitigation strategies. These inaccuracies can also affect uplink coverage optimisation, as the network may assume devices have stronger transmission capabilities than the device is actually capable of. This can result in underestimated power compensation and weaker coverage in real deployment scenarios.

Unlike conducted power, an output transmission power can take into account an actual antenna efficiency. An output transmission power refers to a power transmitted (that is, output) by the antenna. It will be appreciated that any appropriate terminology may be used for this output power, including but not limited to an output power, a transmission power, an output power parameter, an antenna output power, OTA power and so on, and such language may be used interchangeably herein.

One example of an output power parameter is a total radiated power (TRP). TRP is the total power radiated by an antenna in all directions, considering all angular radiation patterns. It can account for antenna gain, efficiency and losses, and can provide a more complete picture of how much power is actually transmitted into space. For example, if a 5G UE has a conducted transmission power of 23 dBm (power class 3), but due to antenna inefficiencies, the TRP is only 18 dBm, then it can be inferred that there is a 5 dB loss due to the antenna system. By informing the network of the TRP (or another output transmission power parameter), the network can implement more effective interference management, and network efficiency and uplink reliability can be improved.

TRP can be determined in a number of ways. It can be calculated based on an antenna pattern or effective isotropic radiated power (EIRP) for example. It may also be measured (for example, by software).

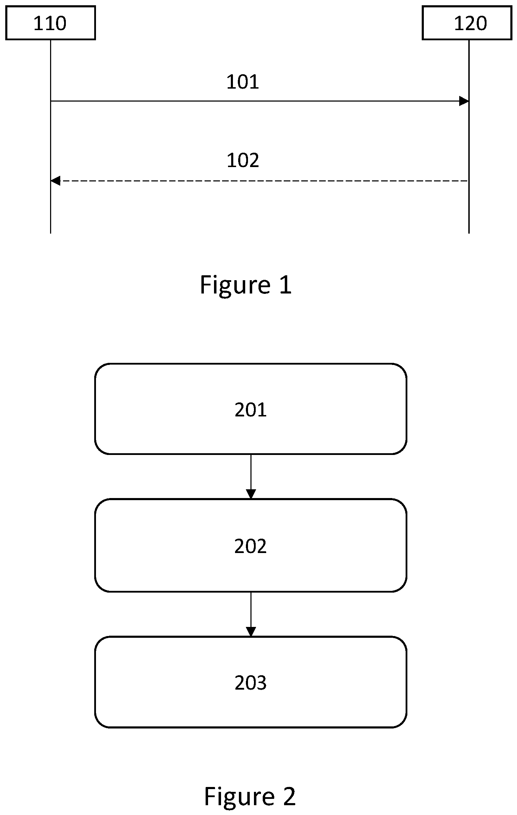

Figure 1 illustrates a message flow for monitoring a transmission power parameter in accordance with the present disclosure. A system comprises a device 110 comprising an antenna, and a network 120. The device 110 may be a UE and the network 120 may be a telecommunications network, and may more specifically be a cellular network. The network 120 may be a network node of the network (for example, where the network is a cellular network, a base station). It will be appreciated that the methods discussed herein may be implemented with other devices and types of network.

An output transmission power parameter of the antenna is identified. Identifying the output transmission parameter may comprise determining the output transmission power parameter based on a measurement. For example, a device vendor or manufacturer may perform tests for a device and/or an antenna (for instance, prior to putting the device on the market). The tests may involve conductive and OTA testing (although in some cases, only OTA testing may occur). The OTA testing may comprise one or more of transmitting a signal at a particular frequency or set of frequencies, using a particular input power or set of input power values, transmitting a signal via different types of RF path (for instance, reflected and direct), and so on. Such tests may already be performed in order to achieve certification of a minimum TRP for a frequency band or range of frequencies, so this testing can be leveraged to provide reporting to the network once the device is deployed in the network (although it currently is used only to achieve certification).

The results of the testing may be stored by the device. For example, a pre-calibrated OTA uplink power level table may be stored by the device. If it is determined that there is a linear relationship between the test parameter (for example, the conducted power) and the output transmission power parameter, then a single value may be stored. For instance, if it is determined that the variation between OTA performance and conductive performance is 2dB, then this value can be stored. This way, for a known conductive power level, an equivalent OTA power level can be determined, estimated or calculated based on this stored value. The testing may thus comprise determining a relationship between the test parameter and the output transmission parameter. In some cases, information regarding this relationship may be stored by the device. For instance, in cases where the relationship is non-linear, the stored results may comprise information regarding the non-linear relationship.

Other factors may also or instead be included in the testing parameters. For instance, the output transmission power parameter may be identified based on the type of antenna. For example, the OTA testing may be performed for different types of antenna, and the device 110 may store a value according to the antenna comprised within the device 110. In another example, the OTA testing may be performed for different types of device, and the device 110 may store a value according to the type of device (for example, different device models). Similarly, individual RF components may be tested, or tests for the same type of device but having different RF components may be performed, and the device 110 may store a value based on the RF components comprised within it.

In other examples, the device 110 may identify the output power parameter itself. For example, some devices may include a built-in power sensor that is configured to measure an output RF power level. This measurement or feedback can be used to adjust the output power parameter dynamically and optionally in real-time (or near-real time).

In other examples, the device 110 may monitor impedance matching of the device 110 to identify the output transmission power parameter. That is, the amount of power that has been radiated cannot be directly determined at or before the antenna terminals through electrical measurements, but losses due to an impedance mismatch may be used to estimate, determine or calculate a power loss of the antenna. The monitoring may be performed by monitoring or measuring a standing wave ratio (SWR). For example, if an SWR meter measures an incident power of 100W and 50W of reflected power, this may indicate that 50W of power have been absorbed by the antenna and/or lost due to transmission line losses. The SWR measured or monitored may more specifically be a voltage standing wave ratio.

In yet further examples, the device 110 may have previously reported a transmission power parameter (which may have been an input or output transmission power parameter). For example, the device 110 may have reported a physical uplink shared channel (PUSCH) or physical uplink control channel (PUCCH) transmitter power. The network 120 may provide feedback on the reported power - for example, through an uplink signal-to-interference-plus-noise ratio (UL-SINR). The device 110 can then identify the output transmission power parameter based on this feedback. For example, if the reported transmission power received at the network is significantly lower than would be expected based on the previously reported transmission power parameter, the device 110 may adjust its estimation of an output transmission power parameter. In other examples, the device 110 determine based on the feedback that the input transmission power parameter inaccurately reflects the output transmission power parameter and estimate, calculate or determine an output transmission power parameter based on the feedback.

After identifying the output transmission power parameter of the antenna, the device 110 sends 101 a communication indicating the output transmission power parameter and/or indicating a power parameter determined based on the output transmission power parameter to the network. The communication may specifically flag the output transmission power parameter and/or determined power parameter as such (that is, marking it as distinct from an input power parameter). For example, the communication may label such parameters as "UL" - for example, P_UL_TRP for an uplink TRP power parameter or PH_UL for a power headroom derived from the output transmission power parameter. Other terminology may be used.

In cases where the device 110 sends 101 the communication indicating the output transmission power parameter to the network, the network can then use this to implement improved power control and/or interference management techniques. The communication need not include the output transmission power parameter itself. For example, the device 110 may send a value of a difference between an input power parameter and an output transmission power parameter. This may be the case where the network already has information regarding the input power parameter of the device, and thus can use the difference to identify the output transmission power parameter at the network.

The difference may be an expected difference. For instance, where device testing has indicated that the relationship between the input power parameter and output transmission power parameter is not linear, the difference may be estimated based on existing information. In other examples, the difference may otherwise be estimated based on existing information (for instance, an estimated or assumed RF path, information for a different frequency band transmission, and so on).

In some cases, the output transmission power parameter may be used (preferably by the device) to calculate or estimate other power-related values that may be used by the network (for example, to more effectively use network resources). The communication sent to the network can then indicate this other power-related value.

For instance, one parameter that may be indicated is a power headroom (PH). A PH indicates an amount of transmission power remaining for a device (typically a UE) to use, taking into account the power currently being used for transmission. In other words, power headroom reporting is a mechanism for reporting an available transmission power of the device to the network (for example, a base station in a telecommunications, such as an eNodeB, gNodeB, NodeB, and so on). In simple terms, it may normally be considered as $PH = Maximum device transmission power - PUSCH Power = {P}_{max} - {P}_{PUSCH}$ or $PH = Maximum device transmission power - PUCCH Power = {P}_{max} - {P}_{PUCCH}$

The purpose of reporting the PH is to allow the network to effectively manage network resources and allocate appropriate power levels to devices. If the PH value is positive, it indicates to the network that the device 110 can transmit more data if allowed. If the PH value is negative, it indicates that the device 110 is transmitting a power greater than it is allowed to transmit. The PH value can therefore be important for implementing power control methods and effective resource allocation.

As indicated above, the PH is reported in existing infrastructure based on the conducted power. As discussed herein, this can be inaccurate and lead to inefficient network performance. However, the output transmission power parameter can be used to modify the PH equation to address these potential inaccuracies. For example, where the output transmission power parameter is an uplink TRP (P_{UL, TRP}), the PH may be considered as $PH = {P}_{UL , TRP , max} - {P}_{PUCCH / PUSCH}$ where *P_{UL,TRP,max}* is the maximum uplink TRP that the device is capable of. This may have been determined during testing.

It should be noted that the TRP PUCCH and TRP PUSCH values could replace the values of *P_{PUCCH}* and *P_{PUSCH}.* It will be appreciated also that TRP PUCCH and TRP PUSCH values could be sent to the network during the step of sending 101.

Using the output transmission power parameter to determine the PH can allow the amount of transmission power available to the device to be more accurately determined. Thus, the decisions of the network based on the PH can be better informed, allowing better resource allocation and power control, which in turn can provide efficient and reliable communication in the network.

It will be appreciated that other power-related parameters may be transmitted to the network based on the output transmission power parameter.

Optionally, and as outlined above with respect to identifying the output transmission power parameter, the device 110 may receive 102, from the network 120, an indication of a power parameter received at the network from the device. For example, the network may send a signal strength measurement such as, for example, an SINR, signal-to-noise ratio (SNR), received signal strength indicator (RSSI), reference signal received power (RSRP), and so on. The received indication can be used by the device to refine the identified output transmission power parameter or to otherwise take action, as will be discussed in more detail with reference to Figure 2.

Figure 1 has been described as a method for monitoring a transmission power parameter, but it will be appreciated that the method may be considered as a method for reporting a transmission power parameter to a network or identifying a transmission power parameter of a device comprising an antenna, and so on.

Figure 2 illustrates a flow chart of a method in accordance with the present disclosure. At step 201, an output transmission power parameter of a device antenna is identified. The output transmission power parameter may be identified as discussed above with reference to Figure 1. For example, the OTA transmission power level can be measured, calculated or estimated by a UE. At step 202, a communication indicating the output transmission power parameter and/or a communication indicating a power parameter determined based on the output transmission power parameter is sent to a network. Again, this may be as described above with reference to Figure 1.

At step 203, a transmission power parameter may be adjusted. The parameter adjusted may be the output transmission power parameter, the input transmission power parameter or a related parameter, and the adjustment may be performed by the device comprising the antenna.

For example, the device may receive from the network an indication of a power parameter received at the network from the device (as discussed with reference to Figure 1). This indication may be received after step 201 and/or step 202, or may be received at another time. The device may then, at step 203, in response to determining that the indication differs from a power transmitted by the device by more than a threshold amount, adjust the identified output transmission power parameter. In other words, the output transmission power parameter identified in step 201 may be updated based on additional information.

For example, whilst the output transmission power parameter may have been identified based on OTA testing that aims to identify the output of antenna based on its implementation, real-world conditions may differ from the testing conditions sufficiently that the identified output transmission power parameter does not most accurately represent the actual output transmission power of the antenna. In other cases, the antenna (or other components of the device) may have degraded sufficiently that the previously identified output transmission power parameter is not accurate.

The difference identified in step 203 may be identified based on any of the identification methods discussed above with reference to Figure 1. For instance, the device may include a sensor configured to measure an output transmission power parameter, the device may monitor impedance matching, the network may provide feedback to the device, and so on. It will be appreciated that other methods of identifying the difference may also or instead be used.

In other examples, the input transmission power may be adjusted at step 203. For example, it may be determined based on the identified output transmission power parameter that the preconfigured input power for the antenna is not expected to provide sufficient signal to the network. The device may therefore increase its input power parameter for the antenna. In other examples, the device may decrease its input power parameter for the antenna (for instance, to reduce interference).

In some cases, the input power parameter may be adjusted also based on information received from the network. For example, in OLPC, a device can estimate a path loss between the device and the network based on a reference signal received from the network and an indication of the power with which the reference signal was sent by the network. The device may determine that it should increase the input power parameter to account for the estimated path loss. By using the output power parameter to assess the device power, the device can adjust its initial power correctly based on an actual transmission power, rather than internal estimates.

In further examples, the power parameter determined based on the output transmission power parameter may be adjusted. This may be in addition to adjusting the output transmission power parameter. For example, the power headroom value may be adjusted if the output transmission power parameter has been adjusted.

Although this disclosure is concerned primarily with methods for informing a network of an output transmission power parameter of a device comprising an antenna, possible implementations that the received output power parameter can be used for at the network will be briefly discussed below for illustration purposes.

For example, the output transmission power parameter may be used to provide more accurate closed loop power control. In particular, more accurate transmit power control (TPC) commands based on the output transmission power parameter can be used, rather than an inaccurate device reported power that is based on an input power.

In another example, the output transmission power parameter can be used to provide more accurate interference detection, since the network can better distinguish true high-power devices from devices with high internal power but low OTA power.

Furthermore, the output transmission power parameter can provide uplink coverage improvement and/or optimisation. In particular, the network can compensate for actual power loss, which can in turn improve cell-edge connectivity.

Additionally, MIMO and massive MIMO algorithms such as precoding, decoding, scheduling, improve sounding reference signal reciprocity and so on can be implemented based on the reported output transmission power parameter.

Other uses for the OTA power parameter at the network and/or device are also possible, particularly any use that involves the use of an input power parameter for a device antenna or another power parameter that otherwise does not reflect the OTA power parameter value or level.

The methods described herein may be implemented with computer system configurations including hand-held devices, microprocessor systems, microprocessor- based or programmable consumer electronics, minicomputers, mainframe computers and the like. The embodiments can also be practiced in distributed computing environments, where tasks are performed by remote processing devices that are linked through a network.

Certain embodiments can also be embodied as computer-readable code on a non-transitory computer-readable medium. The computer readable medium is any data storage device than can store data, which can thereafter be read by a computer system. Examples of the computer readable medium include hard drives, network attached storage (NAS), read-only memory, random-access memory, CD-ROMs, CD-Rs, CD-RWs, magnetic tapes, and other optical and non-optical data storage devices. The computer readable medium can also be distributed over a network coupled computer systems so that the computer readable code is stored and executed in a distributed fashion. Although embodiments according to the disclosure have been described with reference to particular types of devices and applications (particularly telecommunications and network devices) and the embodiments have particular advantages in such case, as discussed herein, approaches according to the disclosure may be applied to other types of device and/or application. Each feature disclosed in this specification, unless stated otherwise, may be replaced by alternative features serving the same, equivalent or similar purpose. Thus, unless stated otherwise, each feature disclosed is one example only of a generic series of equivalent or similar features.

All of the aspects and/or features disclosed in this specification may be combined in any combination, except combinations where at least some of such features and/or steps are mutually exclusive. In particular, the preferred features of the disclosure are applicable to all aspects and embodiments of the disclosure and may be used in any combination. Likewise, features described in non-essential combinations may be used separately (not in combination).

It will be appreciated that there is an implied "about" prior to power values and so on discussed in the present teachings, such that slight and insubstantial deviations are within the scope of the present teachings. Furthermore, values referred to as being "equal" may in fact differ by less than a threshold amount. The threshold amount may be 5%, for example. The threshold may also be greater than 5% (e.g., 10%, 20% or 50%) or less than 5% (for example, 2% or 1 %). Other threshold values are possible.

As used herein, including in the claims, unless the context indicates otherwise, singular forms of the terms herein are to be construed as including the plural form and vice versa. For instance, unless the context indicates otherwise, a singular reference herein including in the claims, such as "a" or "an" (such as a communication channel, for instance) means "one or more" (for instance, one or more communication channels). It will also be appreciated that the terms "one or more" and "at least one" are interchangeable.

Throughout the description and claims of this disclosure, the words "comprise", "including", "having" and "contain" and variations of the words, for example "comprising" and "comprises" or similar, mean "including but not limited to", and are not intended to (and do not) exclude other components. Also, the use of "or" is inclusive, such that the phrase "A or B" is true when "A" is true, "B is true", or both "A" and "B" are true.

The use of any and all examples, or exemplary language ("for instance", "such as", "for example" and like language) provided herein, is intended merely to better illustrate the disclosure and does not indicate a limitation on the scope of the disclosure unless otherwise claimed. No language in the specification should be construed as indicating any non-claimed element as essential to the practice of the disclosure.

The terms "first" and "second" may be reversed without changing the scope of the invention. That is, an element termed a "first" element (e.g. a first device) may instead be termed a "second" element (e.g. a second device) and an element termed a "second" element (e.g. a second device) may instead be considered a "first" element (e.g. a first device). It will also be appreciated that other labelling may be used without changing the scope of the invention (for example, referring to the device by its function or use, such as, for instance, a network device or telecommunications device).

Any steps described in this specification may be performed in any order or simultaneously unless stated or the context requires otherwise. Moreover, where a step is described as being performed after a step, this does not preclude intervening steps being performed.

It is also to be understood that, for any given component or embodiment described herein, any of the possible candidates or alternatives listed for that component may generally be used individually or in combination with one another, unless implicitly or explicitly understood or stated otherwise. It will be understood that any list of such candidates or alternatives is merely illustrative, not limiting, unless implicitly or explicitly understood or stated otherwise.

In this detailed description of the various embodiments, for the purposes of explanation, numerous specific details are set forth to provide a thorough understanding of the embodiments disclosed. One skilled in the art will appreciate, however, that these various embodiments may be practiced with or without these specific details. Furthermore, one skilled in the art can readily appreciate that the specific sequences in which methods are presented and performed are illustrative and it is contemplated that the sequences can be varied and still remain within the scope of the various embodiments disclosed herein.

All literature and similar materials cited in this application, including but not limited to patents, patent applications, articles, books, treaties and internet web pages are expressly incorporated by reference in their entirety for any purpose. Unless otherwise described, all technical and scientific terms used herein have a meaning as is commonly understood by one of ordinary skill in the art to which the various embodiments described herein belongs.

## Claims

1. A method for monitoring a transmission power parameter of a device comprising an antenna configured for wireless communication with a network, the method comprising steps of:
identifying an output transmission power parameter of the antenna; and
sending a communication indicating the output transmission power parameter and/or indicating a power parameter determined based on the output transmission power parameter to the network.

2. The method according to claim 1, wherein identifying the output transmission power parameter comprises one or more of:
determining the output transmission power parameter based on a measurement;
estimating the output transmission power parameter; and
calculating the output transmission power parameter.

3. The method according to claim 1 or claim 2 further comprising, determining, estimating or calculating an available surplus transmission power parameter for the antenna based on the output transmission power parameter,
wherein sending the communication indicating the power parameter determined based on the output transmission power parameter comprises sending a communication indicating the available surplus transmission power parameter for the antenna.

4. The method according to any previous claim, further comprising monitoring impedance matching of the device to identify the output transmission power parameter.

5. The method according to claim 4, wherein monitoring impedance matching of the device comprises measuring a voltage standing wave ratio.

6. The method according to any previous claim, wherein the determining is performed by an external device and the determined output transmission power parameter is stored by a server or the device.

7. The method according to claim 6, wherein identifying the output transmission power parameter comprises identifying the output transmission parameter based on one or more of: a type of antenna, a type of device, a type of radio frequency, RF, component comprised within the device, an expected RF path of transmission between the device and the network, an RF transmission frequency, and a conducted power parameter.

8. The method according to any previous claim, further comprising receiving, from the network and at the device, an indication of a power parameter received at the network from the device.

9. The method according to claim 8, further comprising, in response to determining that the indication differs from a power transmitted by the device by more than a threshold amount, adjusting the identified output transmission power parameter.

10. The method according to any previous claim, wherein the device is a user equipment, UE.

11. The method according to any previous claim wherein the network is a cellular network and the output transmission power parameter is reported to a base station of the cellular network.

12. The method according to any previous claim, further comprising, adjusting, at the device, an input transmission power parameter based on the output transmission power parameter.

13. The method according to any previous claim, wherein the output transmission power parameter comprises a total radiated power.

14. A computer program comprising instructions that, when executed by a computer, cause the computer to implement the method of any previous claim.

15. A computer-readable medium comprising the computer program according to claim 14.
